# EUROPEAN PATENT APPLICATION

(11) **EP 3 494 799 A1**
(43) Date of publication of application: **12.06.2019**
(21) Application number: 16911555.7
(22) Date of filing: 04.08.2016
(51) Int. Cl.: A23L 3/365

(54) **THAWING MACHINE**

(71) Applicant: Mayatec Co., Ltd., Kobe-shi, Hyogo 650-0024 (JP)
(72) Inventor: GODAI, Tomoyuki, Chuo-ku, Kobe-shi Hyogo 6500024 (JP)
(74) Representative: Dehns
(86) International application number: PCT/JP2016/003612
(87) International publication number: WO 2018/025293

(57) **Abstract**

A thawing machine includes a metal member supporting a pallet on which frozen objects are placed; an electric power supply which applies an AC voltage to the metal member so that a predetermined low current of 1µ A or higher and 1000mA or lower flows through the frozen objects; and a cover unit covering the frozen objects and having an air permeability and an electric conductivity, wherein the AC voltage is applied to the cover unit in addition to the metal member while the frozen objects are thawed.

## Description

### Technical Field

The present invention relates to a thawing machine.

### Background Art

There is known a technique which can suppress quality deterioration (e.g., oxidation or dripping resulting from tissue destruction of cells), which takes place in a case where frozen food is thawed (defrosted).

For example, Patent Literature 1 discloses a technique in which frozen food is put on a plurality of metal plates (racks) arranged inside a container of a thawing machine, and an AC voltage is applied to the racks. Specifically, Patent Literature 1 proposes a technique for thawing the frozen food (hereinafter this will be referred to as voltage application thawing), while providing a function for suppressing deterioration of quality of the frozen food (e.g., function which activates cells to suppress the oxidation or the dripping resulting from the tissue destruction of the cells) using electric energy. In addition, there is proposed a method in which the voltage application thawing is performed for the frozen food managed at a partial thawing temperature, inside a container of a thawing machine similar to the above (see Patent Literature 2).

### Citation List

### Patent Literature

Patent Literature 1: International Publication No. 2008/096631
Patent Literature 2: International Publication No. 2015/040816

### Summary of Invention

### Technical Problem

However, in the conventional examples, the voltage application thawing of a large quantity of frozen objects with higher efficiency was not studied sufficiently. An aspect of the present invention has been made in view of the above-described circumstances, and provides a thawing machine which is capable of performing the voltage application thawing of the frozen objects with higher efficiency than in the conventional example.

### Solution to Problem

To achieve the above-described object, according to an aspect of the present invention, a thawing machine comprises a metal member supporting a pallet on which frozen objects are placed; an electric power supply which applies an AC voltage to the metal member so that a predetermined low (weak) current of 1µ A or higher and 1000mA or lower flows through the frozen objects; and a cover unit covering the frozen objects and having an air permeability and an electric conductivity, wherein the AC voltage is applied to the cover unit in addition to the metal member while the frozen objects are thawed.

### Advantageous Effects of Invention

A thawing machine according to an aspect of the present invention has an advantage in that the thawing machine can perform voltage application thawing of frozen objects with higher efficiency than in a conventional example.

### Brief Description of Drawings

Fig. 1 is a view showing an example of a thawing machine according to an embodiment.
Fig. 2 is a view showing an example of the thawing machine according to the embodiment.

### Description of Embodiments

The voltage application thawing of the frozen objects performed with higher efficiency was intensively studied, and the following findings could be obtained. Specifically, the inventors discovered that the efficiency of the voltage application thawing of the frozen objects can be significantly improved, by performing the voltage application thawing of the frozen objects, in a state in which the frozen objects are placed on a pallet.

Specifically, a thawing machine according to a first aspect of the present invention comprises a metal member supporting a pallet on which frozen objects are placed; an electric power supply which applies an AC voltage to the metal member so that a predetermined low (weak) current of 1µ A or higher and 1000mA or lower flows through the frozen objects; and a cover unit covering the frozen objects and having an air permeability and an electric conductivity, wherein the AC voltage is applied to the cover unit in addition to the metal member while the frozen objects are thawed.

In accordance with this configuration, the voltage application thawing of the frozen objects can be performed with higher efficiency than in the conventional example. Specifically, the pallet on which the frozen objects are placed is transported (carried) by use of a forklift (not shown) to a location that on a metal member of the thawing machine disposed in a suitable storage place (e.g., a storeroom with an internal temperature managed at a partial thawing temperature), and the frozen objects are covered by the cover unit. In this state, the voltage application thawing of the frozen objects can be performed. In this case, since the cover unit has the air permeability and the electric conductivity, the voltage application thawing of the frozen objects can be properly performed while managing the temperature of the frozen objects at a proper temperature, by applying the AC voltage from the electric power supply to the metal member and the cover unit. As compared to the conventional example, in which the frozen objects with a small quantity are placed on each of the plurality of racks, the frozen objects with a large quantity can be staked on the pallet, in the present invention. This makes it possible to significantly increase the efficiency of the voltage application thawing of the frozen objects. In addition, as compared to the conventional example in which voltage application thawing of the frozen objects is performed inside a container which has a limited space, the voltage application thawing of the frozen objects can be performed in the storage place which has a sufficient space, in the present invention. Therefore, the efficiency of the voltage application thawing of the frozen objects can be significantly increased.

According to a second aspect of the present invention, in the thawing machine according to the first aspect, the frozen objects managed at a partial thawing temperature may be thawed.

In accordance with this configuration, as disclosed in Patent Literature 2, the frozen objects can be preserved in a partially thawed state at a temperature which is equal to or lower than 0 degree C, in the thawing of the frozen objects. This makes it possible to reduce a loss which occurs in the conventional example.

According to a third aspect of the present invention, in the thawing machine according to the first or second aspect, the cover unit may cover a substantially entire region where the frozen objects are placed on the pallet.

In accordance with this configuration, by applying the AC voltage from the electric power supply, a proper electric field is formed in the entire region where the frozen objects are placed. This makes it possible to effectively perform the voltage application thawing of the frozen objects.

According to a fourth aspect of the present invention, in the thawing machine according to any one of the first aspect, the second aspect, and the third aspect, the cover unit may include a band-shaped metal net, and a pair of metal rods provided at both ends of the metal net, one of the pair of metal rods may be disposed to extend along a first end of the metal member, the other of the pair of metal rods may be disposed to extend along a second end of the metal member, the metal net may be provided to extend over a region where the frozen objects are placed, between the pair of metal rods, and the metal net and the metal member may be in electric contact with each other via the pair of metal rods.

In accordance with this configuration, the cover unit can be simply constituted by the metal net which is flexible, and the electric contact between the metal net and the metal member can be easily obtained.

Hereinafter, the embodiment of the present invention will be described with reference to the attached drawings. The embodiment described below is merely a specific example of the present invention. Therefore, numeric values, shapes, materials, constituents (elements), positions of the constituents, connection states of the constituents, or the like, which are described below in the embodiment, are merely exemplary, and are not intended to limit the present invention. The constituents (elements) which are not recited in an independent claim indicating the broadest content of the invention, of the constituents of the present embodiment, are described as arbitrary constituents. In the drawings, the constituents designated by the same reference symbols will not be described in repetition in some cases. For easier understanding of the drawings, the constituents are schematically shown in the drawings, and shapes, dimension ratios, or the like, are not accurate in some cases.

### (Embodiment)

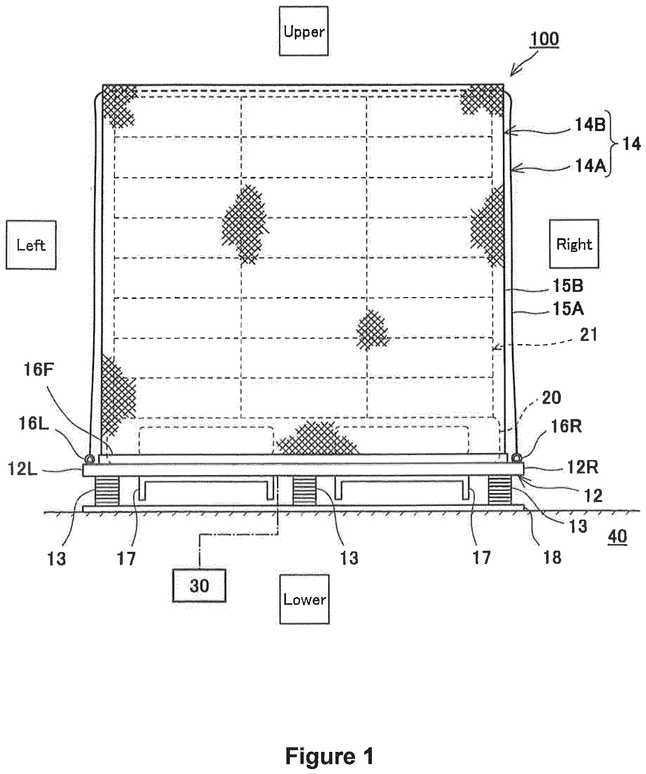

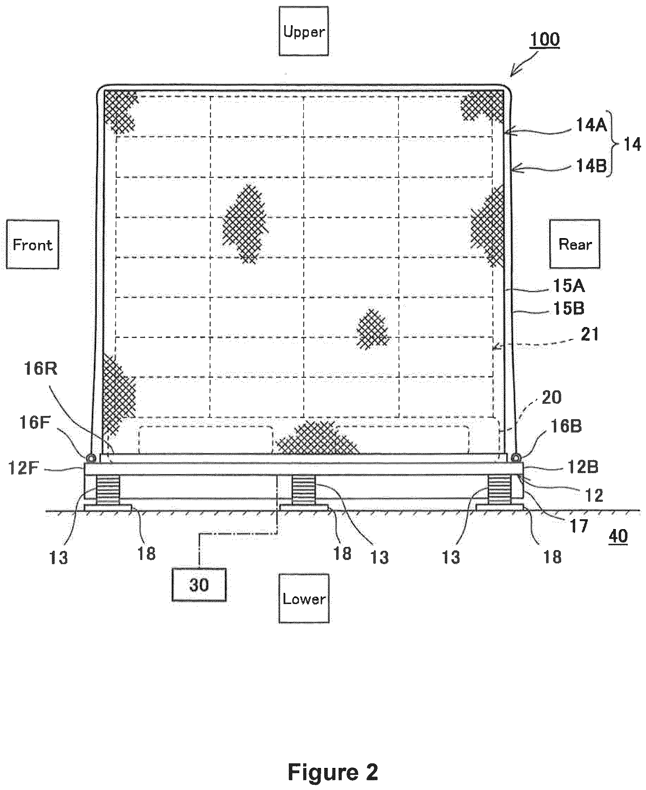

Figs. 1 and 2 show an example of a thawing machine according to the embodiment. In Figs. 1 and 2, upper, lower, left, right, front, and rear are defined as shown, for easier understanding, and a gravitational force is applied in a downward direction (in a direction from the upper to the lower).

Figs. 1 and 2 show a state in which a pallet 20 on which frozen food 21 is placed (loaded) has been transported by use of a forklift (not shown), or the like, to a location that is on a metal member 12 of a thawing machine 100 disposed in a suitable storage place (e.g., a storeroom with an internal temperature managed at a partial thawing temperature), and a cover unit 14 covers the frozen food 21.

Specifically, the thawing machine 100 includes the metal member 12, an electric power supply 30, the cover unit 14, insulating members 13, guide rails 17, and base plates 18.

The metal member 12 is a member supporting the pallet 20 (e.g., plastic-made pallet) on which objects (products) of the frozen food 21 are stacked together. As the metal member 12, for example, a plate member made of metal (e.g., stainless) and having a rectangular shape with an outer dimension that is a little larger than that of the rectangular plate 20 may be used.

The electric power supply 30 is an AC voltage application device configured to apply a predetermined AC voltage (e.g., 10V or higher and 10kV or lower) to the metal member 12 so that a predetermined low (weak) current of 1µ A or higher and 1000mA or lower flows through the frozen food 21. This electric power supply 30 includes a transformer (not shown). One of a pair of secondary terminals of the transformer is electrically connected to the metal member 12 via a wire. The other (not shown) of the pair of secondary terminals of the transformer is opened. The metal member 12 and the other of the pair of secondary terminals of the transformer are insulated from each other by air. The metal member 12 is retained by the three insulating members 13 (e.g., insulators) extending upward from the three base plates 18, respectively, which are placed on a storeroom floor 40. In this way, the metal member 12 is properly kept in an insulated state.

A body of the thawing machine 100, including the metal member 12, the insulating members 13, and the base plates 18 is integrally fastened by suitable fastening means (e.g., bolts). A pair of guide rails 17 with a recessed shape are mounted on the reverse surface of the metal member 12. By inserting forks of the forklift in a front-rear direction along the recessed portions of the guide rails 17, the body of the thawing machine 100 can be easily transported (carried).

The cover unit 14 includes a pair of cover members 14A, 14B covering the frozen food 21 and having an air permeability and an electric conductivity. The cover unit 14 is configured to cover a substantially entire region where the objects of the frozen food 21 are placed on the pallet 20.

The cover members 14A, 14B may have any configuration so long as the cover members 14A, 14B are able to cover the objects of the frozen food 21 and have an air permeability and an electric conductivity. For example, the cover members 14A, 14B may include a flexible metal net, or a rigid metal net.

Hereinafter, the cover members 14A, 14B of the present embodiment will be described in more detail with reference to the drawings.

The cover members 14A, 14B of the present embodiment include band-shaped metal nets 15A, 15B, respectively (e.g., stainless net). Metal-made pipes 16R, 16L (metal rods) are disposed at both ends in the lengthwise direction of the metal net 15A. Likewise, metal-made pipes 16F, 16B (metal rods) are disposed at both ends in the lengthwise direction of the metal net 15B.

In the cover member 14A, the pipe 16R is disposed to extend along the right end 12R of the rectangular metal member 12, and the pipe 16L is disposed to extend along the left end 12L of the metal member 12. The pipe 16R is put on a portion of the metal member 12 which is in the vicinity of the right end 12R of the metal member 12 by a gravitational force. The pipe 16L is put on a portion of the metal member 12 which is in the vicinity of the left end 12L of the metal member 12 by the gravitational force. The metal net 15A is provided to extend over an entire region where the objects of the frozen food 21 are placed, between the pipe 16R and the pipe 16L, to cover the entire region from right and left. In this configuration, the metal net 15A almost completely covers the right side surface, left side surface, and upper surface of the region where the objects of the frozen food 21 are placed, and the metal net 15A and the metal member 12 are in electric contact with each other via the pipes 16R, 16L.

In the cover member 14B, the pipe 16F is disposed to extend along the front end 12F of the rectangular metal member 12, and the pipe 16B is disposed to extend along the rear end 12B of the metal member 12. The pipe 16F is put on a portion of the metal member 12 which is in the vicinity of the front end 12F of the metal member 12 by the gravitational force. The pipe 16B is put on a portion of the metal member 12 which is in the vicinity of the rear end 12B of the metal member 12 by the gravitational force. The metal net 15B is provided to extend over an entire region where the objects of the frozen food 21 are placed, between the pipe 16F and the pipe 16B, to cover the entire region from front and rear. In this configuration, the metal net 15B almost completely covers the front side surface, rear side surface, and upper surface of the region where the objects of the frozen food 21 are placed, and the metal net 15B and the metal member 12 are in electric contact with each other via the pipes 16F, 16B.

As described above, in the cover unit 14 of the present embodiment, the cover members 14A, 14B can be easily constituted by the flexible metal nets 15A, 15B, respectively, and the electric contact between the metal nets 15A, 15B and the metal member 12 can be easily obtained.

As described above, in the thawing machine 100 of the present embodiment, the voltage application thawing of the frozen food 21 can be performed with higher efficiency than in the conventional example. Specifically, the pallet 20 on which the objects of the frozen food 21 are placed is transported (carried) by use of a forklift (not shown) or the like, to a location that is on the metal member 12 of the thawing machine 100 disposed in a suitable storage place (e.g., a storeroom with an internal temperature managed at a partial thawing temperature), and the objects of the frozen food 21 are covered by the cover unit 14. In this state, the voltage application thawing of the frozen food 21 can be performed. In this case, since the cover unit 14 has the air permeability and the electric conductivity, the voltage application thawing of the frozen food 21 can be properly performed while managing the temperature of the frozen food 21 at a proper temperature, by applying the AC voltage from the electric power supply 30 to the metal member 12 and the cover unit 14. As compared to the conventional example, in which the objects of the frozen food with a small quantity are placed on each of the plurality of racks, the objects of the frozen food 21 with a large quantity can be staked together on the pallet 20 in the present invention. This makes it possible to significantly increase the efficiency of the voltage application thawing of the frozen food 21. In addition, as compared to the conventional example in which the voltage application thawing of the frozen food is performed inside a container which has a limited space, the voltage application thawing of the frozen food 21 can be performed in the storage place which has a sufficient space in the present invention. Therefore, the efficiency of the voltage application thawing of the frozen food 21 can be significantly increased.

In the thawing machine 100 of the present embodiment, the frozen food 21 managed at the partial thawing temperature is thawed. As disclosed in Patent Literature 2, the frozen food 21 can be preserved in the partially thawed state at a temperature which is equal to or lower than 0 degree C, in the thawing of the frozen food 21. This makes it possible to reduce a loss which occurs in the conventional example. As defined herein, the partial thawing temperature is, for example, a temperature of the frozen food 21 in the thawing, which is in a range of 0 degree C to minus 10 degrees C.

In the thawing machine 100 of the present embodiment, since the cover unit 14 covers a substantially entire region where the objects of the frozen food 21 are placed on the pallet 20, a proper electric field is formed in this entire region, by applying the AC voltage from the electric power supply 30. This makes it possible to effectively perform the voltage application thawing of the frozen food 21.

Numerous modifications and alternative embodiments of the present invention will be apparent to those skilled in the art in view of the foregoing description. Accordingly, the description is to be construed as illustrative only, and is provided for the purpose of teaching those skilled in the art the best mode of conveying out the invention. The details of the structure and/or function may be varied substantially without departing from the spirit of the invention. For example, although the frozen food 21 is described above as an example of the frozen objects, the present invention is applicable to cultured cells in a frozen state, as well as the frozen food 21.

### Industrial Applicability

An aspect of the present invention can be used in a thawing machine which can perform voltage application thawing of frozen objects with higher efficiency than in a conventional example.

### Reference Signs List

- 12: metal member
- 13: insulating member
- 14: cover unit
- 14A: cover member
- 14B: cover member
- 15A: metal net
- 15B: metal net
- 16B: pipe
- 16F: pipe
- 16L: pipe
- 16R: pipe
- 17: guide rail
- 18: baseplate
- 20: pallet
- 21: frozen food
- 30: electric power supply
- 40: storeroom floor
- 100: thawing machine

## Claims

1. A thawing machine comprising:
a metal member supporting a pallet on which frozen objects are placed;
an electric power supply which applies an AC voltage to the metal member so that a predetermined low current of 1µ A or higher and 1000mA or lower flows through the frozen objects; and
a cover unit covering the frozen objects and having an air permeability and an electric conductivity,
wherein the AC voltage is applied to the cover unit in addition to the metal member while the frozen objects are thawed.

2. The thawing machine according to claim 1,
wherein the frozen objects managed at a partial thawing temperature are thawed.

3. The thawing machine according to claim 1 or 2,
wherein the cover unit covers a substantially entire region where the frozen objects are placed on the pallet.

4. The thawing machine according to any one of claims 1 to 3,
wherein the cover unit includes a band-shaped metal net, and a pair of metal rods provided at both ends of the metal net,
wherein one of the pair of metal rods is disposed to extend along a first end of the metal member, and the other of the pair of metal rods is disposed to extend along a second end of the metal member,
wherein the metal net is provided to extends over a region where the frozen objects are placed, between the pair of metal rods, and
wherein the metal net and the metal member are in electric contact with each other via the pair of metal rods.
